# EUROPÄISCHE PATENTSCHRIFT

(11) **EP 2 460 639 B1**
(45) Veröffentlichungstag und Bekanntmachung des Hinweises auf die Patenterteilung: **10.10.2018**
(21) Anmeldenummer: 11191606.0
(22) Anmeldetag: 01.12.2011
(51) Int. Cl.: B29C 49/42, B29C 49/58, B29C 49/78, F16K 31/124

(54) **Vorrichtung zur Blasformung von Behältnissen**
Device for blow moulding containers
Dispositif de moulage par soufflage de récipients

(30) Priorität: 01.12.2010 DE 102010052903
(43) Veröffentlichungstag der Anmeldung: 06.06.2012
(73) Patentinhaber: Krones AG, 93073 Neutraubling (DE)
(72) Erfinder: Voth, Klaus, 93073 Neutraubling (DE); Geltinger, Florian, 93073 Neutraubling (DE); Handschuh, Eduard, 93073 Neutraubling (DE)
(74) Vertreter: Bittner, Bernhard

(56) Entgegenhaltungen:
- EP-A1- 1 271 029
- EP-A1- 1 293 329
- EP-A1- 2 078 890
- EP-A1- 2 335 904
- EP-A2- 0 882 921
- DE-A1- 10 131 556
- DE-A1- 19 956 575
- US-A- 4 267 861
- US-A- 4 644 969

## Beschreibung

Die vorliegende Erfindung bezieht sich auf eine Vorrichtung gemäß Anspruch 1 zur Blasformung von Behältnissen. Derartige Vorrichtungen sind aus dem Stand der Technik seit langem bekannt. Dabei werden üblicherweise erwärmte Kunststoffvorformlinge mit Druckluft beaufschlagt um auf diese Weise zu Kunststoffbehältnissen umgeformt zu werden. Üblicherweise weisen derartigen Vorrichtungen zum Umformen der Kunststoffvorformlinge zu Kunststoffbehältnissen ein Blasrad auf, an dem eine Vielzahl von Blasstationen angeordnet ist. Diese Blasstationen wiederum bilden hierbei Hohlräume aus, innerhalb derer die Kunststoffvorformlinge expandiert werden.

Die Beaufschlagung der Kunststoffvorformlinge mit Druckluft erfolgt dabei üblicherweise mittels Blasdüsen. Der zur Expansion der Kunststoffvorformlinge nötige Blasdruck wird dabei üblicherweise mittels Ventilblöcken zur Verfügung gestellt. Aus dem Stand der Technik sind diverse Ausgestaltungen dieser Ventilblöcke bzw. Ventilmechanismen bekannt.

Die EP 1 328 396 B1 beschreibt eine Blasmaschine mit einem an der Blasvorrichtung angebrachten Steuerventil zur Steuerung der Blasluft. Dabei ist ein die Blasdüse zumindest über einen Teil ihrer Höhe ringartig umschließender Ventilkörper vorgesehen. Ein Niederdruckventil, ein Hochdruckventil sowie ein Entlüftungsventil sind über den Umfang des Ventilträgers verteilt angeordnet und durch Bohrungen im Ventilträger mit der Blasdüse verbunden.

Aus der EP 1 271 029 B1, die den Gegenstand des Oberbegriffs des Anspruchs 1 offenbart, ist eine Vorrichtung zur Blasformung von Behältern bekannt. Diese Vorrichtung weist dabei eine Einrichtung zur pneumatischen Steuerung des Blasdrucks auf und diese Einrichtung weist einen in einem Zylinder geführten Steuerkolben auf, der in Richtung einer Längsachse gelagert ist. Dabei ist dieser Steuerkolben zumindest bereichsweise aus einem Kunststoff ausgebildet. Durch diese bereichsweise Ausbildung des Steuerkolbens aus Kunststoff wird ein metallischer Kontakt mit der Wandung des Zylinders vermieden. Auf diese Weise können separate Führungsbänder vermieden werden. Daneben weist dieser Steuerkolben aus Kunststoff auch ein geringeres Gewicht und eine verringerte Massenträgheit auf.
Diese Vorrichtung arbeitet zwar zufriedenstellend, es hat sich jedoch gezeigt, dass die auf diese Weise hergestellten Steuerkolben teilweise einem erhöhten Verschleiß unterliegen.
Der vorliegenden Erfindung liegt daher Aufgabe zugrunde, eine Vorrichtung zur Blasformung von Behältern zur Verfügung zu stellen, welche eine erhöhte Lebensdauer aufweist. Dies wird erfindungsgemäß durch den Gegenstand des unabhängigen Anspruchs erreicht. Vorteilhafte Ausführungsformen und Ausbildungen sind Gegenstand der Unteransprüche.

Bei einer ersten Ausgestaltung weist die vorliegende Vorrichtung auf einem Blasrad angeordnete Blasstationen zur Blasformung von Behältern aus einem thermoplastischen Material auf. Weiterhin weist die Vorrichtung eine Einrichtung zur pneumatischen Steuerung eines Blasdrucks auf, wobei die Einrichtung zur pneumatischen Steuerung einen in einem Zylinder geführten Steuerkolben aufweist, der in Richtung einer Kolbenlängsachse verschieblich gelagert ist und bei der durch den Zylinder - im Folgenden auch als Führungszylinder oder allgemein Führungskörper bezeichnet - hindurch ein vom Steuerkolben verschließbarer Hauptströmungsweg verläuft. Weiterhin ist der Steuerkolben mit einer Steuerfläche versehen, die einem Steuerraum des Zylinders zugewandt ist und die zur Übertragung einer Steuerkraft auf den Steuerkolben ausgebildet ist.

Eine Umfangswandung des Steuerkolbens blockiert in wenigstens einer Position des Steuerkolbens den Hauptströmungsweg. Mit anderen Worten ist insbesondere der Hauptströmungsweg in einem geschlossenen Zustand der Einrichtung von einer Umfangswandung des Steuerkolbens blockiert.

Während im Stand der Technik üblicherweise nur die Stirnflächen des Steuerkolbens den Hauptströmungsweg für die Blasluft blockieren, wird hier vorgeschlagen, dass zusätzlich zumindest auch die Umfangswandung den Hauptströmungsweg blockiert. Bei den Behältern handelt es sich insbesondere um Kunststoffvorformlinge bzw. die daraus zu formenden Kunststoffbehälter. Unter einem Blockieren wird dabei verstanden, dass die besagte Umfangswandung dem Hauptströmungspfad im Weg steht. Dabei muss die Umfangswandung den Hauptströmungspfad nicht notwendigerweise abdichten. Vielmehr ist es möglich, dass die Abdichtung über eine Stirnfläche des Steuerkolbens bzw. einen Teil dieser Stirnfläche erfolgt.

Vorteilhaft ist dabei ein Einlass für die Druckluft in einer Umfangswandung des Zylinders angeordnet. Vorteilhaft ist ein Einlass für die Blasluft bzw. Druckluft gegenüber dem Auslass in der Längsrichtung des Steuerkolbens versetzt, d.h. höhenversetzt. Im Stand der Technik wird üblicherweise durch eine Stirnfläche des Steuerkolbens sowohl der Einlass für die Druckluft als auch der Auslass für die Druckluft abgedeckt bzw. blockiert. Im Rahmen der hier vorliegenden Offenbarung wird vorgeschlagen, dass zumindest entweder der Einlass für die Blasluft oder der Auslass für die Blasluft, bevorzugt der Einlass für die Blasluft von einer Umfangswandung des Steuerkolbens in einem geschlossenen Zustand der Einrichtung bzw. des Ventils blockiert bzw. (zumindest teilweise) versperrt wird. Der Vorteil dieser Ausführungsform besteht darin, dass so eine gleichmäßigere Anströmung des Steuerkolbens in dessen Umfangsrichtung möglich ist.

Eine weitere Ausgestaltung einer vorliegenden Vorrichtung weist auf einem Blasrad angeordnete Blasstationen zur Blasformung von Behältern aus einem thermoplastischen Material auf. Weiterhin weist die Vorrichtung eine Einrichtung zur pneumatischen Steuerung eines Blasdrucks auf, wobei die Einrichtung zur pneumatischen Steuerung einen in einem Zylinder geführten Steuerkolben aufweist, der in Richtung einer Kolbenlängsachse verschieblich gelagert ist und bei der durch den Zylinder hindurch ein vom Steuerkolben verschließbarer Hauptströmungsweg verläuft. Weiterhin ist der Steuerkolben mit einer Steuerfläche versehen, die einem Steuerraum des Zylinders zugewandt ist und die zur Übertragung einer Steuerkraft auf den Steuerkolben ausgebildet ist.

Der Steuerkolben ist mindestens bereichsweise aus einem Metall oder einer Keramik ausgebildet.

Es wird daher vorgeschlagen, ein pneumatisch gesteuertes Ventil zur Verfügung zu stellen, dessen Steuerkolben bereichsweise aus einem Metall oder einer Keramik ausgebildet ist. Durch diese Ausbildung des Steuerkolbens aus Metall oder Keramik kann die Widerstandsfähigkeit des Steuerkolbens und damit eines beweglichen Ventilelements erhöht werden und auf diese Weise auch die Lebensdauer der Einrichtung d.h. des Ventils in seiner Gesamtheit.

Bevorzugt ist der Hauptströmungsweg derart angeordnet, dass bei einer Absenkung des Steuerdrucks der Steuerkolben durch den einwirkenden Hochdruck in Richtung der Kolbenlängsachse verschoben wird. Es wäre jedoch auch möglich, dass die Verschiebung des Steuerkolbens nicht unter Einfluss des Hochdrucks bzw. Blasdrucks erfolgt sondern in anderer Weise, etwa durch ein zusätzliches Pilotventil, eine Feder, magnetische Kräfte oder dergleichen.

Vorteilhaft weisen die einzelnen Blasstationen jeweils Blasformen auf, innerhalb derer Kunststoffvorformlinge zu den Kunststoffbehältnissen expandierbar sind.

Erfindungsgemäß weist der Zylinder zumindest teilweise aus einem Kunststoff gefertigte Führungsflächen zum Führen des Steuerkolbens auf. Auf diese Weise wird ein metallischer Kontakt mit dem Steuerkolben vermieden.

Bei einer weiteren vorteilhaften Ausführungsform ist der Hauptströmungsweg in dem Zylinder angeordnet. Während im Falle der EP 1 271 029 der Hauptströmungsweg unterhalb des Kolbens angeordnet ist wird hier vorgeschlagen, dass der Hauptströmungsweg in dem Zylinder bzw. einer Umfangswand des Zylinders selbst befindlich ist. Daher wird bei dieser Ausführungsform der besagte Hauptströmungsweg nicht durch eine Bodenfläche des Steuerkolbens sondern durch den Außenumfang des Steuerkolbens abgedeckt bzw. abgedichtet.

Nach einer weiteren vorteilhaften Ausführungsform weist die Einrichtung zur pneumatischen Steuerung eine Dichtfläche zum Verschließen des Hauptströmungswegs auf und diese Dichtfläche ist an einem Außenumfang des Zylinders angeordnet. Die Stirnfläche des Kolbens wird dabei nicht als Aussenumfang verstanden Damit wird vorgeschlagen, dass der Steuerkolben als zumindest teilweise metallischer oder keramischer Kolben und bevorzugt als Metallkolben oder Keramikkolben ausgeführt ist, der bevorzugt in einer Kunststoffbuchse geführt ist wobei vorteilhaft in diese Kunststoffbuchse auch die besagten Dichtflächen integriert sind. Vorzugsweise sind dabei die Dichtfläche und die besagte Führung für den Steuerkolben zweiteilig ausgebildet.

Bei einer weiteren vorteilhaften Ausführungsform ist der Steuerkolben vollständig aus einem Metall ausgebildet. Vorteilhaft ist der Steuerkolben aus Aluminium ausgebildet.

Bei einer weiteren bevorzugten Ausführungsform weist der Steuerkolben einen Hohlraum auf. Dieser Hohlraum kann dabei im Inneren des Steuerkolbens ausgeführt sein. Mit anderen Worten kann hier zur Gewichtserleichterung der Kolben innen hohl ausgeführt beispielsweise ausgedreht sein.

Bei einer weiteren vorteilhaften Ausführungsform ist in dem Zylinder wenigstens eine Dichtungseinrichtung zum Abdichten der Bewegung des Steuerkolbens (entlang dessen Längsrichtung) angeordnet. Genauer gesagt handelt sich hierbei um Dichtflächen, die zum Abdichten der Bewegung des Steuerkolbens ausgebildet sind.

Bei einer weiteren vorteilhaften Ausführungsform weist die Vorrichtung einen den Steuerkolben in dessen Umfangsrichtung (bzw. um dessen Bewegungsrichtung herum) umgebenden Beaufschlagungsraum auf, der insbesondere mit Blasluft beaufschlagbar ist. Dies bedeutet, dass im Gegensatz zum Stand der Technik der Steuerkolben nicht ausschließlich in seiner Längsrichtung mit dem Druck beaufschlagt wird sondern voll umfänglich von der Seite her. Auf diese Weise ist eine symmetrische Anströmung des Steuerkolbens möglich. Vorteilhaft weist die Vorrichtung wenigstens zwei, bevorzugt wenigstens drei und bevorzugt eine Vielzahl von gleichmäßig am Umfang des Steuerkolbens angeordneten Luftöffnungen auf. In einem geschlossenen Zustand der Einrichtung bzw. des Ventils werden diese Luftöffnungen vorteilhaft durch den Aussenumfang des Steuerkolbens verschlossen.

Bei einer weiteren vorteilhaften Ausführungsform weist der Steuerkolben eine Drängfläche auf, welche den Steuerkolben bei Beaufschlagung mit Druckluft - insbesondere in der radialen Richtung des Steuerkolbens d.h. einer zu der Längsrichtung des Steuerkolbens senkrecht stehenden Richtung - entlang der Kolbenlängsachse verschiebt. Bei dem Stand der Technik kann der Steuerkolben unmittelbar durch die in Längsrichtung auftreffende Luft verschoben werden. Da, wie oben erwähnt, bei der hier dargestellten Ausführungsform die Luft nicht mit einer Längsrichtung auf den Steuerkolben trifft sondern seitwärts, ist vorteilhaft die genannte Drängfläche vorgesehen. Dabei kann es sich beispielsweise um eine am Kolbenende angeordnete Schrägflache handeln, die bei der Beaufschlagung mit Druckluft in einer radialen bzw. senkrecht zu der Bewegungsrichtung des Steuerkolbens stehenden Richtung eine Bewegung des Steuerkolbens in seiner Gesamtheit bewirkt. Daneben kann die besagte Drängfläche an einem Außenumfang des Steuerkolbens angeordnet sein. Dies wird unter Bezugnahme auf die Figuren genauer erläutert.

Bei einer weiteren bevorzugten Ausführungsform ist der Steuerkolben mehrteilig und insbesondere zweiteilig ausgebildet. Dabei kann eines dieser mehreren bzw. beiden Teile des Steuerkolbens beispielsweise aus einem Metall und das andere aus Kunststoff gefertigt sein.

Bei einer weiteren vorteilhaften Ausführungsform ist an dem Steuerkolben ein Anschlagmittel, wie beispielsweise eine Anschlagsschraube, angeordnet. Diese Anschlagsschraube dient dabei zum einen als Anschlag und zum anderen vorteilhaft auch als Deckel zur Reduzierung des Steuerlufttotraumvolumens.

Bei einer bevorzugten Ausführungsform ist der Steuerkolben aus einem Material hergestellt, welches aus einer Gruppe ausgewählt ist, welche Metalle, Keramik, Magnesium, Hartgummi und der gleichen enthält. Die Führung bzw. der Führungszylinder ist, wie oben erwähnt, vorteilhaft aus einem Kunststoff hergestellt.

Es wäre jedoch auch möglich, dass der Führungszylinder aus Metall oder Keramik ausgebildet ist. Auch wäre es möglich, dass der Führungszylinder mehrteilig aufgebaut ist und beispielsweise einen aus Kunststoff gefertigten Führungskörper zum Führen des Steuerkolbens aufweist sowie einen Grundkörper, der diesen Führungskörper trägt. Dieser Grundkörper kann dabei auch den Steuerraum ausbilden.

Bei einer weiteren vorteilhaften Ausführungsform weist der Steuerkolben ein Kunststoffelement auf. Auf diese Weise ist es möglich, dass sich der Steuerkolben aus einem metallischen Anteil und einem Kunststoffanteil zusammensetzt. So wäre es beispielsweise möglich, dass in einem Hohlraum des Steuerkolbens ein Kunststoffsegment untergebracht ist. Auch wäre möglich, dass eine Dichtfläche am Ende des Steuerkolbens aus Kunststoff ausgebildet ist. Daneben wäre es möglich, dass ein Kunststoffelement in einen ansonsten aus Metall bestehenden Steuerkolben eingearbeitet ist.

Weitere Vorteile und Ausführungsformen ergeben sich aus den beigefügten Zeichnungen:
Darin zeigen:
- Fig. 1: eine schematische Darstellung einer Vorrichtung zum Blasformen von Behältern;
- Fig. 2a: einen Ventilblock nach dem Stand der Technik;
- Fig. 2b: eine Detaildarstellung des Ventilblocks aus Figur 2a;
- Fig. 3: eine Darstellung einer Einrichtung zur pneumatischen Steuerung des Blasdrucks;
- Fig. 4: eine weitere Ausführungsform einer Einrichtung;
- Fig. 5a: eine Detaildarstellung einer Einrichtung;
- Fig. 5b: eine weitere Detaildarstellung einer Einrichtung;
- Fig. 6a - 6c: drei mögliche Varianten für Steuerkolben;
- Fig. 7a - 7b: zwei Teilansichten einer Vorrichtung;
- Fig. 8a - 8d: vier Darstellungen einer vorteilhaften Ausführungsform eines Ventils
- Fig.9a: eine weitere Ausführungsform einer Einrichtungsform zur pneumatischen Steuerung;
- Fig. 9b: eine weitere Ausführungsform einer Einrichtung zur Steuerung des Blasdrucks;
- Fig. 10: eine weitere Ausführungsform einer Einrichtung zur Steuerung des Blasdrucks;
- Fig. 11a, 11b: zwei Darstellungen eines aseptischen Pilotventils.

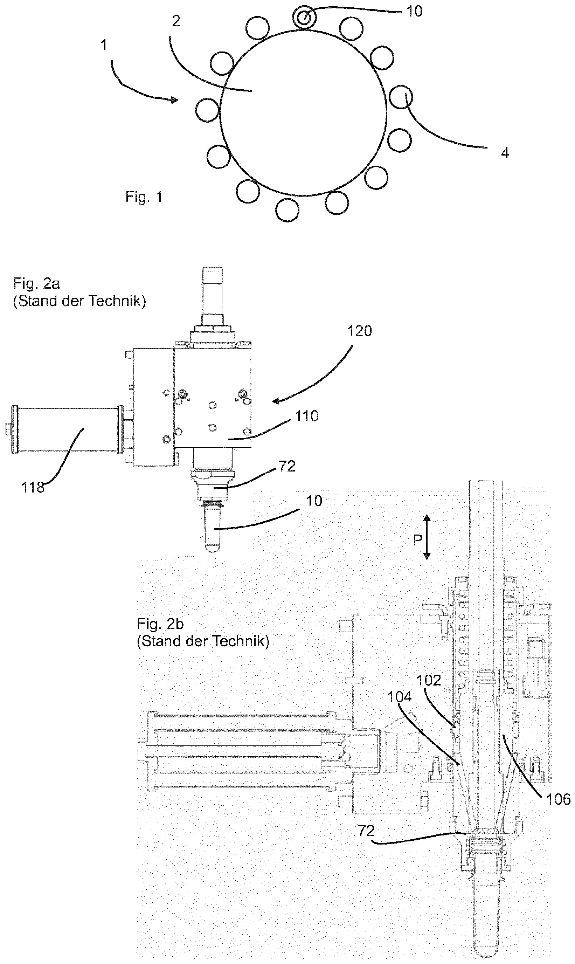

Fig. 1 zeigt eine grob schematische Darstellung einer Vorrichtung 1 zum Umformen von Behältnissen. Diese Vorrichtung weist dabei einen drehbaren Träger, wie ein Blasrad 2 auf, an dem eine Vielzahl von Blasstationen 4 angeordnet ist. Diese Blasstationen 4 dienen dabei jeweils zum Umformen von Kunststoffvorformlingen 10 zu Kunststoffbehältnissen. Zu diesem Zweck weisen die einzelnen Blasstationen jeweils Blasformen auf, die in ihrem Inneren einen Hohlraum ausbilden, der zur Expansion der Kunststoffvorformlinge 10 dient. Vorzugsweise weisen die einzelnen Blasstationen auch Reckstangen auf, welche die Kunststoffvorformlinge in deren Längsrichtung dehnen, so dass es sich bei der Vorrichtung um eine Streckblasmaschine handelt.

Fig. 2a zeigt einen Ventilblock nach dem Stand der Technik. Dieser Ventilblock weist dabei eine Blasdüse 72 auf, welche an die Kunststoffvorformlinge 10 angelegt wird, um diese zu deren Expansion mit Druckluft zu beaufschlagen. Das Bezugszeichen 110 bezieht sich auf ein Gehäuse des Ventilblocks, der in seiner Gesamtheit mit 120 bezeichnet ist. Das Bezugszeichen 118 kennzeichnet einen Schalldämpfer.

Fig. 2b zeigt eine detailliertere Darstellung eines Ventilblocks nach dem Stand der Technik. Man erkennt, dass hier Zuführkanäle 104 vorhanden sind, über welche die Blasluft dem Kunststoffvorformling 10 zugeführt werden kann. Das Bezugszeichen 106 bezieht sich auf einen beweglichen Kolben, der hier beispielsweise durch Verwendung von Führungskurven oder dergleichen entlang des Doppelpfeils P bewegt werden kann. Über einen Ringraum 102 kann mittels eines (nicht gezeigten) Ventils die Blasluft zur Expansion der Kunststoffvorformlinge 10 zugeführt werden.

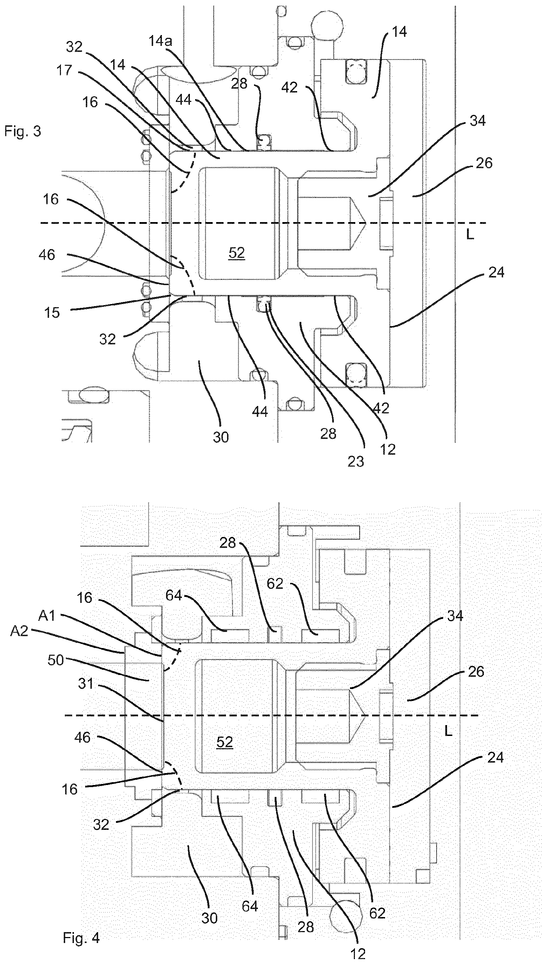

Fig. 3 zeigt eine Darstellung einer Einrichtung 20 zur pneumatischen Steuerung des Blasdrucks bzw. eines Steuerblocks 20. Dieser Steuerblock weist dabei einen Steuerkolben 14 auf, der entlang der Längsachse L verschieblich gelagert ist. Im Einzelnen ist dieser Steuerkolben 14 in einem Zylinder 12 bzw. einem Führungskörper 12 verschieblich gelagert.

Der Steuerkolben 14 ist dabei wenigstens abschnittsweise aus einem Metall ausgebildet und insbesondere ist er an seinem Außenumfang 14a aus einem Metall ausgebildet. Der Zylinder bzw. der Führungszylinder 12 ist hier aus einem Kunststoff ausgebildet. In diesen Zylinder 12 sind auch Führungsflächen 42 und 44 integriert, die hier ebenfalls aus Kunststoff gefertigt sind. Das Bezugszeichen 28 kennzeichnet eine Dichtungseinrichtung, die hier ebenfalls in einer umlaufenden Nut 23 des Zylinders 12 angeordnet ist. Das Bezugszeichen 16 kennzeichnet einen Hauptströmungsweg, der bei geöffnetem Ventil (in Fig. 3 ist die geschlossene Stellung gezeichnet) von einem Beaufschlagungsraum 30 zu einem Auslass 31 führt. Entlang dieses Hauptströmungswegs 16 gelangt die Blasluft zu den (nicht dargestellten) Kunststoffvorformlingen.

Das Bezugszeichen 32 kennzeichnet Öffnungen, welche hier gleichmäßig in Umfangsrichtung des Steuerkolbens 14 verteilt und insbesondere in dem Zylinder 12 angeordnet sind. Eine am Aussenumfang 14a des Steuerkolbens 14 angeordnete Fläche 17 liegt den einzelnen Öffnungen 32 in einem geschlossenen Zustand des Ventils gegenüber..

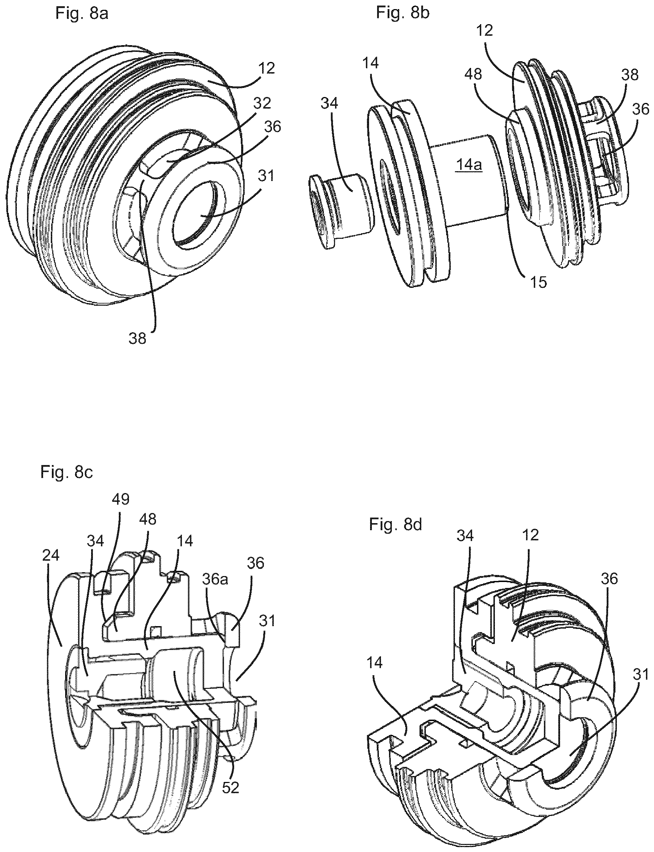

Das Bezugszeichen 46 bezieht sich auf eine Dichtfläche des Steuerkolbens 14, welche den Austrittskanal 31 in der in Fig. 3 gezeigten Position abdeckt. Damit bewirkt die Dichtfläche 46 auch eine Abdichtung des Hauptströmungswegs 16. Genauer gesagt liegt der Steuerkolben in einem geschlossenen Zustand des Ventils an einem Dichtkörper 36 an, der hier an dem linken Ende des Zylinders 12 ausgebildet ist. Vorteilhaft ist dieser Dichtkörper 36 einteilig mit dem Zylinder 36 ausgebildet. Dies wird unter Bezugnahme auf die Figuren 8a - 8d genauer erläutert.

Bei der in Fig. 3 gezeigten Darstellung ist diese Dichtfläche 46 an dem Steuerkolben 14 angeordnet, genauer bildet ein Abschnitt der Stirnfläche des Steuerkolbens die besagte Dichtfläche 46 aus. Der Steuerkolben 14, der hier als Metallkolben ausgeführt ist (jedoch auch aus Keramik gefertigt sein kann) wird damit in einem zusätzlichen Führungszylinder, d.h. dem Zylinder 12, der hier aus Kunststoff gefertigt ist, geführt. Der Zylinder dient gleichzeitig zur Abdichtung der Stirnfläche des Steuerkolbens 14 gegen den metallischen Ventilblock. Falls der Steuerkolben 14 aus Keramik besteht, kann auf den zusätzlichen Führungszylinder 12 verzichtet werden. Der Führungszylinder kann wiederum in einem Aufnahmekörper wie einer Hülse (nicht gezeigt) aufgenommen sein.

Der Steuerkolben 14 ist direkt auf den in den Zylinder 12 integrierten Führungsstellen bzw. Passungsdurchmessern 42, 44 gelagert. Zur Gewichtseinsparung weist der Führungskolben in seinem Inneren einen Hohlraum 52 auf, bzw. ist innen hohl ausgedreht. Das Bezugszeichen 34 kennzeichnet eine Anschlagschraube. Diese Anschlagschraube 34 dient einerseits dazu, um einen Anschlag für die Rückwärtsbewegung des Steuerkolbens 14 auszubilden und andererseits dient diese Anschlagschraube 34 auch als Deckel zur Reduzierung des Steuerluft-/ Totvolumens, da durch diese Anschlagschraube 34 der Hohlraum 52 abgedeckt wird. Die Luftöffnungen 32 sind gleichmäßig am Umfang des Steuerkolbens 14 angeordnet, und bewirken dadurch, dass der Kolben symmetrisch von der Druckluft angeströmt wird.

Das Bezugszeichen 15 bezieht sich auf eine als Schrägfläche ausgebildete Drängfläche, die am unteren Ende des Steuerkolbens 14 angeordnet ist. Diese Drängfläche bzw. Schrägfläche 15, die hier umlaufend ausgebildet ist, dient dabei auch als Drängfläche. Unter einer Drängfläche wird eine Fläche bzw. ein Abschnitt verstanden, der durch seine (insbesondere geometrische) Anordnung geeignet ist, bei Beaufschlagung mit einem gasförmigen Medium eine Kraft zu erzeugen, die hier in der Längsrichtung des Steuerkolbens wirkt. Damit lenkt die Drängfläche eine auf sie wirkende Kraft bevorzugt um. Sobald der den Steuerkolben 14 umgebende Raum 30 mit Druckluft beaufschlagt wird, wirkt dieser Druck auch auf diese Drängfläche 15 und bewirkt damit, dass der Steuerkolben 14 in Fig. 3 nach rechts zurückgedrängt wird.

Dabei ist jedoch die Einrichtung 20 so ausgelegt, dass bei Vorhandensein eines Steuerdrucks in dem Steuerraum 26 von beispielsweise 10 bar der Steuerkolben 14 in der in Fig. 3 gezeigten, linken Position ist. Erst wenn der Steuerdruck in dem Steuerraum 26 nicht mehr vorhanden ist, kann sich der Steuerkolben 14 aufgrund des Blasdrucks in Fig. 3 nach rechts bewegen. Der Steuerdruck wirkt dabei auf die Steuerfläche 24 des Steuerkolbens 14

Fig. 4 zeigt eine weitere Ausführungsform einer Einrichtung 20. Bei dieser Ausführungsform erfolgt eine Abdichtung gegenüber dem Auslass 31 mit Hilfe einer Kunststoffscheibe 50, die gleich große Flächen A1, A2 auf den Druckseiten aufweist. Auf diese Weise ergeben sich gleich große Flächen beim Abdichten.

Der Steuerkolben 14 ist hier auf Führungsbändern 62, 64 gelagert, welche in dem Zylinder 12 eingelegt sind. Auch hier ist wieder ein Hohlraum 52 zur Gewichtseinsparung vorgesehen sowie die auch in Fig. 3 dargestellte Anschlagschraube. Wie auch im Fall von Fig. 3 wird auch hier eine symmetrische Anströmung des Steuerkolbens 12 durch die gleichmäßige am Umfang angeordneten Öffnungen 32 erreicht.

Der Steuerkolben kann hier aus Metall, Keramik, ggfs. auch als Magnesium oder Hartgummi hergestellt sein. Der Zylinder bzw. die Führung ist hier vorteilhaft aus Metall oder Keramik hergestellt.

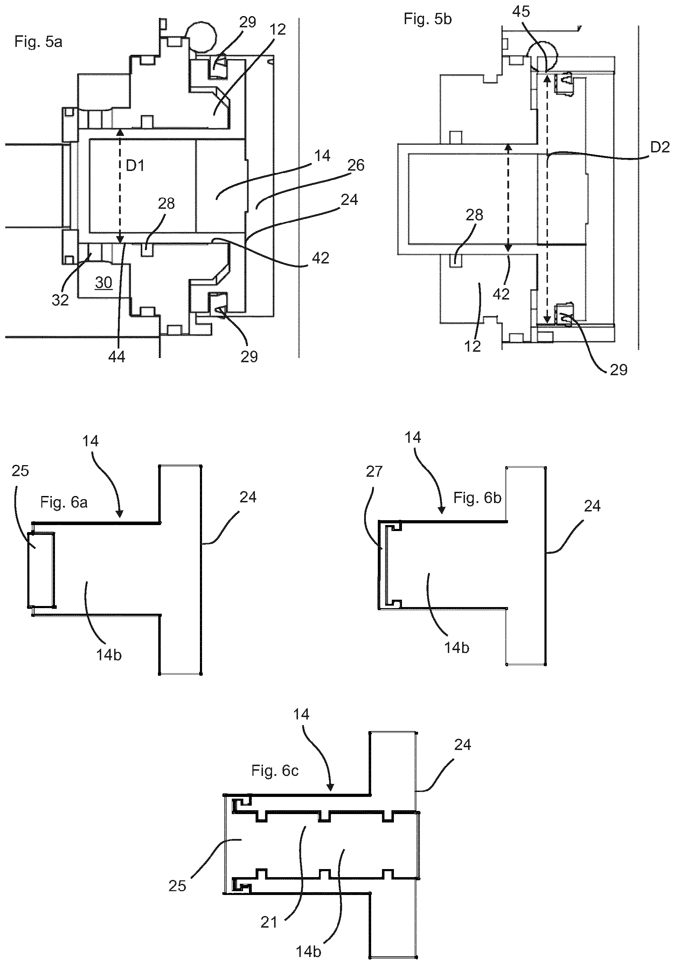

Fig. 5a zeigt eine weitere Ausführungsform zur Veranschaulichung der Führung. Hier ist an dem Steuerkolben 14 eine Dichtung 29 vorgesehen, welche zur Abdichtung des 10 bar Druckraums dient. Eine weitere Dichtung 28 ist in dem Zylinder 12 angeordnet. Der Steuerkolben 14 wird hier ausschließlich auf dem kleinen Durchmesser D1 von dem Zylinder 12 geführt. Die Bezugszeichen 42 und 44 beziehen sich wieder auf die jeweiligen Führungsflächen.

Fig. 5b zeigt eine weitere Ausführungsform einer Einrichtung. In diesem Fall ist ebenfalls eine Dichtung 29 in dem Steuerkolben 12 vorgesehen sowie eine Dichtung 28 in dem Zylinder 12. Die Kolbenführung erfolgt hier jedoch sowohl auf dem kleinen Durchmesser D1, als auch auf dem großen Durchmesser D2 des Steuerkolbens 12. Die Bezugszeichen 42 und 45 beziehen sich auf die jeweiligen Führungsflächen.

Vorzugsweise sind bei allen Ausführungsformen die Führungsflächen derart ausgebildet, dass ein rein metallischer Kontakt der Führungsflächen vermieden wird, so dass beispielsweise die Führung zwischen einer Kunststofffläche und einer Metallfläche oder zwischen zwei Kunststoffflächen erfolgt.

Die Figuren 6a bis 6c zeigen drei mögliche Ausgestaltungen eines Steuerkolbens 14. Bei diesen Ausführungsformen ist der Kolben jeweils aus zwei Komponenten ausgebaut. Im Einzelnen weist der Kolben hierbei einen Grundkörper 14b auf. Bei der in Fig. 6a gezeigten Ausgestaltung ist an dem Grundkörper 14b eine Dichtfläche 25 aus Kunststoff angeordnet. Bei der in Fig. 6b gezeigten Variante ist eine Dichtfläche 27 vorgesehen, welche einen Bereich des Grundkörpers 14b hintergreift. Dabei ist diese Dichtfläche 27 auf den Grundkörper 14b aufvulkanisiert.

Bei der in Fig. 6c gezeigten Ausführungsform ist die Dichtfläche 25 ebenfalls aus Kunststoff hergestellt und mit einem Grundabschnitt 21 in den Grundkörper 14b einvulkanisiert.

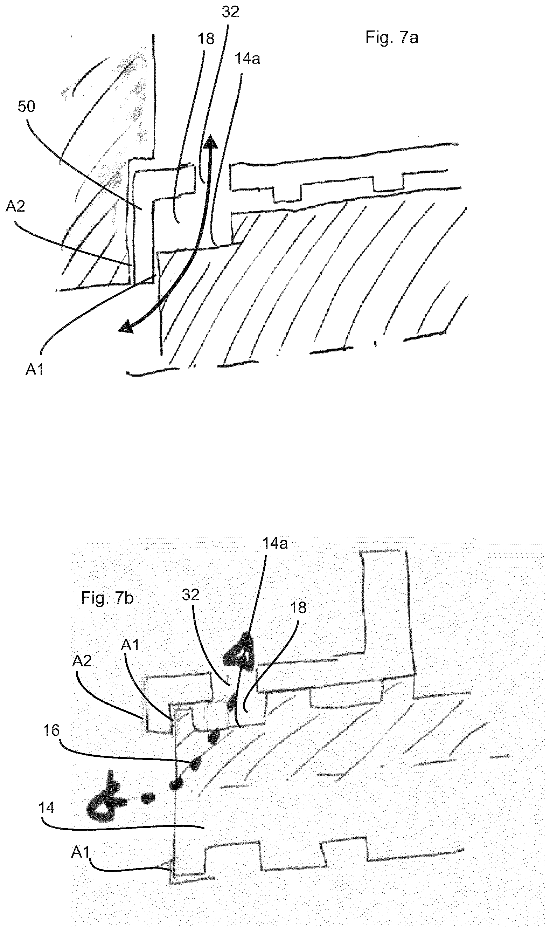

Fig. 7a zeigt eine Detaildarstellung zur Veranschaulichung der Dichtflächen. Dabei blockiert auch hier eine Umfangswandung 14a des Steuerkolbens 14 den Hauptströmungsweg 16. Der Steuerkolben weist jedoch hier eine Ausnehmung 18 auf, so dass die zugeführte Blasluft den Steuerkolben vollumfänglich anströmt. Die Abdichtung erfolgt hier über die beiden Flächen A1 und A2. Genauer gesagt ist auch hier eine Kunststoffscheibe 50 vorgesehen, an der der Steuerkolben 14 über die Fläche A1 zum Zweck der Abdichtung anliegt. Bei den gezeigten Ausführungsformen ist es daher auch nicht notwendig, dass der Steuerkolben die Kunststoffführung über seinen Umfang an allen Stellen berührt. Bei der in Fig. 7a gezeigten Ausführungsform ist damit gewährleistet, dass jeweils eine metallische oder keramische Oberfläche gegenüber einer Kunststofffläche abdichtet. Bevorzugt sind auch hier die beiden Flächen A1 und A2 gleich groß.

Fig. 7b zeigt eine weitere Ausführungsform zur Veranschaulichung der Abdichtung. Auch hier sind wieder zwei Dichtflächen A1 und A2 vorgesehen, über welche die Abdichtung erfolgt. Der Steuerkolben 14 weist hier wiederum eine Ausnehmung 19 auf, welche hier jedoch als umlaufende Nut ausgebildet ist. Das Bezugszeichen 46 bezieht sich in beiden Darstellungen auf die an dem Steuerkolben 14 ausgebildete Dichtfläche. Bevorzugt sind die beiden Flächen A1 und A2 parallel zueinander und besonders bevorzugt in der Längsrichtung des Steuerkolbens 14 zueinander versetzt.

Die Figuren 8a - 8d zeigen verschiede Darstellungen des Zylinders 12, teilweise mit dem darin angeordneten Steuerkolben 14. In Figur 8a erkennt man, dass an dem Zylinder 12 ein Dichtkörper 36 ausgebildet ist. Genauer gesagt ist dieser Dichtkörper 36 einteilig an dem Zylinder 12 angeordnet. Die (in Fig. 8a nicht gezeigte) Innenfläche des Dichtkörpers 36 dient zum Abdichten des Ventils, wenn sich eine entsprechende Stirnfläche des Steuerkolbens 14 daran anlegt. Der Dichtkörper 36 ist mittels Stegen 38 an dem Grundkörper des Zylinders 12 angeordnet und zwischen diesen sind die einzelnen Öffnungen 32, über welche die Blasluft eintreten kann, ausgebildet.

Fig. 8b zeigt eine Darstellung des in Fig 8a gezeigten Zylinders 12 sowie des darin beweglich anzuordnenden Steuerkolbens 14. Man erkennt, dass der Steuerkolben 14 hier insgesamt zweiteilig ausgebildet ist und genauer eine Anschlagschraube 34 aufweist, welche in einen entsprechenden Hohlraum des Steuerkolbens eingeschraubt wird. Das Bezugszeichen 48 bezieht sich auf einen umlaufenden Vorsprung, der an dem Zylinder 12 angeordnet ist. Weiterhin ist auch hier wieder die Drängfläche 15 erkennbar, die bei Beaufschlagung mit Druckluft bewirkt, dass sich der Steuerkolben in Fig. 8b gegenüber dem Zylinder 12 nach links bewegt.

Fig. 8c zeigt eine Schnittdarstellung des Zylinders 12 mit darin angeordnetem Steuerkolben 14. Man erkennt, dass der umlaufende Vorsprung 48 in eine Ausnehmung 49, welche in dem Steuerkolben 14 ausgebildet ist, eindringen kann. Das Bezugszeichen 36a kennzeichnet die oben erwähnte Innenfläche des Dichtkörpers 36 welche gemeinsam mit der Stirnfläche 14c des Steuerkolbens 14 (bzw. einem -insbesondere ringförmigen - Teil dieser Stirnfläche 14c zum Abdichten des Ventils dient. Fig. 8d zeigt eine weitere Schnittdarstellung, bei der insbesondere auch die Stirnfläche 14c des Steuerkolbens 14 sichtbar ist

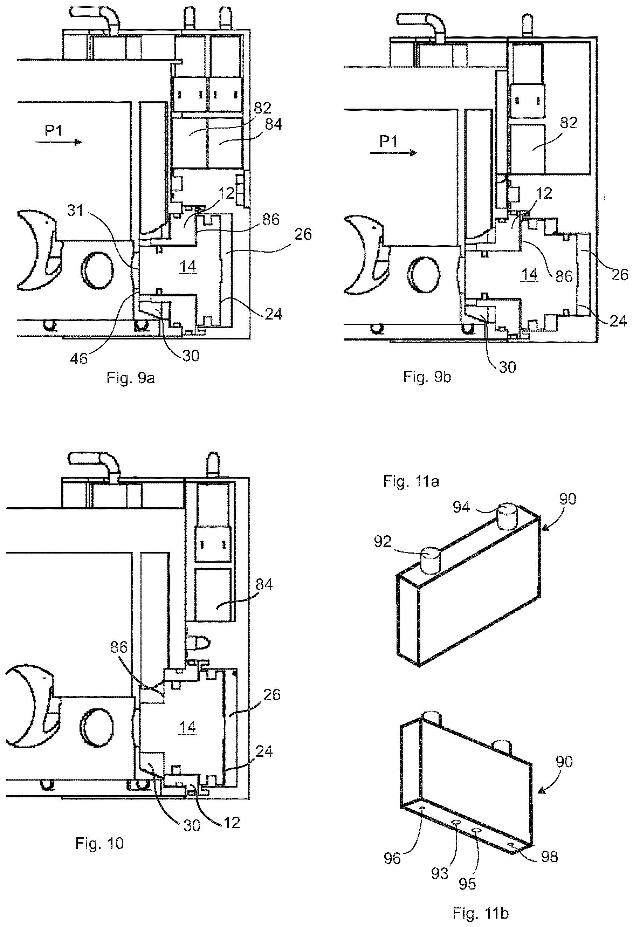

Fig. 9a zeigt eine weitere mögliche Ausführungsform einer Einrichtung. Bei dieser Ausführungsform weist der Steuerkolben 14 nicht die in den Fig. 3 und 4 gezeigten Schrägflächen 15 auf. Daher bewirkt die aus den Ringraum 30 stammende Queranströmung auf den Steuerkolben 14 keine axiale Kraft, weil der Druck nicht an der Stirnseite des Kolbens ansteht. Aus diesem Grund ist eine weitere (zwangsläufige) Ansteuerung mit Hilfe zweier zusätzlicher Ventile 82 und 84, die hier als Pilotventile fungieren, vorgesehen. Mittels eines ersten Pilotventils 82 ist es möglich, eine Ringfläche 86 mit Steuerluft zu beaufschlagen, um auf diese Weise den Steuerkolben 14 in Fig. 7 entlang des Pfeils P1 in seine hintere Stellung (d.h. nach rechts) zu bewegen. In dieser Position kann die Arbeitsdruckluft in den Kunststoffvorformling strömen. Die Bewegung des Steuerkolbens 14 kann durch ein zweites Pilotventil 84 erreicht werden, welches wiederum den Steuerraum 26 mit Druckluft beaufschlagt und auf diese Weise eine Bewegung des Steuerkolbens 14 in Fig. 7 nach links, d. h. entgegen der Pfeilrichtung P1 bewirkt.

Bei der in Fig. 9b gezeigten Ausführungsform wird eine Kombination aus einem zusätzlichen Kolben und einer Luftfeder verwendet. Dieser Systemdruck von 10 bar wirkt hier in dem Steuerraum 26 und bewirkt auf diese Weise, dass der Steuerkolben in die vordere Position gedrückt wird und auf diese Weise das "P1"-Ventil schließt. Mittels des Pilotventils 82 wird die Ringfläche 86 mit Steuerluft beaufschlagt und dadurch kann der Steuerkolben 14 in die hintere Stellung bewegt werden und auf diese Weise kann die Arbeitsdruckluft in den Kunststoffvorformling einströmen.

Bei der in Fig. 10 gezeigten Ausführungsform weist die Einrichtung einen zusätzlichen Kolben auf. Bei dieser Ausführungsform wirkt auf die Ringfläche 86 permanent die Arbeitsdruckluft (z. B. mit 40 bar), sodass der Steuerkolben 14 in die hintere Position gedrückt wird und auf diese Weise das Ventil geöffnet ist (d. h. hier kann die Arbeitsdruckluft in den Kunststoffvorformling einströmen).

Mittels eines Pilotventils 84 wird die Kreisfläche bzw. Steuerfläche 24 mit Steuerluft beaufschlagt und dadurch wird der Steuerkolben 14 in die vordere Stellung bewegt und auf diese Weise schließt das Ventil. Es wäre jedoch auch möglich, dass die Rückstellung des Ventils in anderer Weise, etwa durch eine Feder erfolgt. Auch könnte ein Elektromagnet vorgesehen sein, der den Steuerkolben 14 in den Figuren nach rechts bewegt bzw. das Ventil öffnet.

Bei einer vorteilhaften Ausführungsform weist die Vorrichtung bzw. weisen die Einrichtungen zur pneumatischen Steuerung des Blasdrucks Druckaufnehmer auf. Üblicherweise beinhalten derartige Druckaufnehmer den Druckaufnehmer selbst und die Auswerteelektronik in einem Gehäuse. Damit der Druckaufnehmer näher am Prozess positioniert werden kann, wird hier vorgeschlagen, den Druckaufnehmer zweiteilig auszubilden und insbesondere die Auswerteelektronik beabstandet von dem eigentlichen Druckaufnehmer vorzusehen. Vorteilhaft werden daher die Auswerteelektronik und der Druckaufnehmer selbst als unterschiedliche Bauteile und insbesondere getrennt voneinander ausgeführt.

Die vorliegende Erfindung ist daher weiterhin auf eine Vorrichtung nach dem Oberbegriff von Anspruch 1 gerichtet, wobei diese Vorrichtung einen Druckaufnehmer zum Bestimmen wenigstens eines in der Einrichtung auftretenden Drucks aufweist und wobei eine Auswerteelektronik dieses Druckaufnehmers getrennt von dem eigentlichen Druckaufnehmer angeordnet ist. Bevorzugt ist der Druckaufnehmer unmittelbar an der Einheit zur pneumatischen Steuerung des Blasdrucks angeordnet.

Mit anderen Worten kann der Druckaufnehmer direkt in der Druckkammer, beispielsweise der durch den Blasdruck beaufschlagten Ringkammer 30 positioniert werden und die Auswerteelektronik außerhalb. Auf diese Weise kann der Steuerblock insgesamt kompakter gebaut werden.

Bei einer weiteren vorteilhaften Ausführungsform, welche jedoch auch unabhängig von der Eingangs beschriebenen Offenbarung Anwendung finden kann, erfolgt die Entlüftung der Ventile, wie beispielsweise der Pilotventile 82 und 84 durch (nicht gezeigte) Luftkanäle im Steuerblock. Auf diese Weise ist es möglich, den in Fig. 2a dargestellten Schalldämpfer 118 in einem nicht aseptischen Bereich anzuordnen. Diese Vorgehensweise eignet sich insbesondere bei einer aseptischen Ausführung des Steuerblocks.

Bei einer weiteren vorteilhaften Ausführungsform weist die Einrichtung zur pneumatischen Steuerung zwei Pilotventile auf und weiterhin weist der Steuerblock zwei Auslauss-(exhaust) Ventile auf. Diese Ventile sind dabei jedoch insbesondere redundant vorgesehen und insbesondere bzw. nur zum sicheren Öffnen der Einrichtung bei Ausfall eines Pilotventils gedacht. Dabei wäre es möglich, zwei (redundante) Pilotventile an einem Auslassventil zu verbauen, was vorteilhaft für eine platzsparende Lösung für ein sicheres Öffnen ist.

Fig. 11a und 11b zeigen zwei mögliche Ausführungen eines aseptischen Pilotventils 90. Dabei beziehen sich die Bezugszeichen 92 und 94 auf je einen Signalanschluss, in Fig. 10b die beiden Öffnungen 96 und 98 auf Arbeitsanschlüsse, das Bezugszeichen 95 auf einen Anschluss für einen Schalldämpfer und das Bezugszeichen 93 auf einen Zuführanschluss (insbesondere für Luft). Dabei wäre es auch möglich, ein oder mehrere der in den vorangegangen Figuren gezeigten Pilotventile als eine Einheit auszuführen und beispielsweise in Kunststoff zu vergießen. Der Signalanschluss 92 und 94 kann dabei beispielsweise als IP67 geeigneter Stecker oder auch als spaltfrei vergossenes Kabel ausgeführt sein. Die Luftanschlüsse (für Luftzufuhr und Schalldämpfer) können sowohl für jedes Pilotventil getrennt, als auch gemeinsam nutzbar ausgeführt sein.

### Bezugszeichenliste

- 1: Vorrichtung
- 2: Blasrad
- 4: Blasstationen
- 10: Kunststoffvorformlinge
- 12: (Führungs-)Zylinder, Führungskörper
- 14: Steuerkolben
- 14a: Aussenumfang des Steuerkolbens
- 14b: Grundkörper
- 14c: Stirnfläche des Steuerkolbens
- 15: Drängfläche
- 16: Hauptströmungsweg
- 17: Fläche des Steuerkolbens
- 18: Ausnehmung
- 19: nutförmige Ausnehmung
- 20: Steuerblock, Einrichtung
- 21: Grundabschnitt
- 23: Nut
- 24: Steuerfläche
- 25: Dichtfläche
- 26: Steuerraum
- 27: Dichtfläche
- 28: Dichtungseinrichtung
- 29: Dichtung
- 30: Beaufschlagungsraum, Ringraum
- 31: Auslass, Austrittskanal
- 32: Öffnungen
- 34: Anschlagschraube
- 36: Dichtkörper
- 36a: Innenfläche des Dichtkörpers
- 38: Stege
- 42, 44, 45: Führungsflächen, Passungsdurchmesser
- 46: Dichtfläche
- 48: (ringförmiger) Vorsprung
- 49: Ausnehmung
- 52: Hohlraum
- 62: erstes Pilotenventil
- 62, 64: Führungsbänder
- 72: Blasdüse
- 82, 84: (Pilot)-Ventile
- 86: Ringfläche
- 90: aseptisches Pilotventil
- 92, 94: Signalanschluss
- 93: Zuführanschluss
- 95: Anschluss für Schalldämpfer
- 96, 98: Arbeitsanschlüsse
- 102: Ringraum (Stand der Technik)
- 104: Zuführkanäle (Stand der Technik)
- 106: beweglicher Kolben (Stand der Technik)
- 110: Gehäuse
- 118: Schalldämpfer
- 120: Ventilblock (Stand der Technik)
- A1, A2: große Flächen
- D1: kleiner Durchmesser
- D2: großer Durchmesser
- L: Längsachse
- P: Doppelpfeil
- P1: Pfeil
- P2: Pfeilrichtung

## Patentansprüche

1. Vorrichtung (1) mit auf einem Blasrad (2) angeordneten Blasstationen (4) zur Blasformung von Behältern (10) aus einem thermoplastischen Material, mit einer Einrichtung (20) zur pneumatischen Steuerung eines Blasdruckes, wobei die Einrichtung (20) zur pneumatischen Steuerung einen in einem Zylinder (12) geführten Steuerkolben (14) aufweist, der in Richtung einer Kolbenlängsachse (L) verschieblich gelagert ist und bei der durch den Zylinder (12) hindurch ein vom Steuerkolben (14) verschließbarer Hauptströmungsweg (16) verläuft, sowie bei der der Steuerkolben (14) mit einer Steuerfläche (24) versehen ist, die einem Steuerraum (26) des Zylinders (12) zugewandt ist und die zur Übertragung einer Steuerkraft auf den Steuerkolben (14) ausgebildet ist, wobei der Steuerkolben (14) mindestens bereichsweise aus einem Metall oder einer Keramik ausgebildet ist,
**dadurch gekennzeichnet, dass**
der Zylinder (12) aus einem Kunststoff gefertigte Führungsflächen (42, 44) zum Führen des Steuerkolbens (14) aufweist, durch die Führungsflächen (42, 44) ein metallischer Kontakt des Steuerkolbens (14) mit dem Zylinder verhindert ist.

2. Vorrichtung nach Anspruch 1,
**dadurch gekennzeichnet, dass**
der Hauptströmungsweg (16) derart angeordnet ist, dass bei einer Absenkung des Steuerdrucks der Steuerkolben (14) durch den einwirkenden Hochdruck in Richtung der Kolbenlängsachse (L) verschoben wird.

3. Vorrichtung (1) nach wenigstens einem der vorangegangenen Ansprüche,
**dadurch gekennzeichnet, dass**
der Steuerkolben (14) vollständig aus einem Metall oder aus Keramik ausgebildet ist.

4. Vorrichtung (1) nach wenigstens einem der vorangegangenen Ansprüche,
**dadurch gekennzeichnet, dass**
der Steuerkolben (14) einen Hohlraum (52) aufweist.

5. Vorrichtung (1) nach wenigstens einem der vorangegangenen Ansprüche,
**dadurch gekennzeichnet, dass**
in dem Zylinder (12) wenigstens eine Dichtungseinrichtung (28) zum Abdichten der Bewegung des Steuerkolbens (14) angeordnet ist.

6. Vorrichtung (1) nach wenigstens einem der vorangegangenen Ansprüche,
**dadurch gekennzeichnet, dass**
die Vorrichtung (1) einen den Steuerkolben (14) in dessen Umfangsrichtung umgebenden Beaufschlagungsraum (30) aufweist, der mit Blasluft beaufschlagbar ist.

7. Vorrichtung (1) nach wenigstens einem der vorangegangenen Ansprüche,
**dadurch gekennzeichnet, dass**
der Steuerkolben (14) eine Drängfläche (15) aufweist, welche den Steuerkolben (14) bei Beaufschlagung mit Druckluft entlang der Kolbenlängsachse (L) verschieben kann.

8. Vorrichtung (1) nach wenigstens einem der vorangegangenen Ansprüche,
**dadurch gekennzeichnet, dass**
der Steuerkolben (14) mehrteilig und insbesondere zweiteilig ausgebildet ist.

9. Vorrichtung (1) nach wenigstens einem der vorangegangenen Ansprüche,
**dadurch gekennzeichnet, dass**
der Steuerkolben (14) eine Anschlagschraube (34) aufweist.

10. Vorrichtung (1) nach wenigstens einem der vorangegangenen Ansprüche,
**dadurch gekennzeichnet, dass**
der Steuerkolben (14) ein Kunststoffelement (25, 27) aufweist.

## Claims

1. Device (1) with blow stations (4) disposed on a blow wheel (2) for blow moulding containers (10) from a thermoplastic material, having a unit (20) for pneumatic control of a blow pressure, wherein the unit (20) for pneumatic control has a control piston (14) which is guided in a cylinder (12) and is mounted so as to be movable in the direction of a longitudinal axis (L) of the piston, and wherein a main flow path (16) which can be closed by the control piston (14) extends through the cylinder (12), and wherein the control piston (14) is provided with a control surface (24) which faces a control chamber (26) of the cylinder (12) and is designed to transmit a control force to the control piston (14), wherein the control piston (14) is constructed at least in some regions from a metal or a ceramic,
**characterized in that**
the cylinder (12) has guide surfaces (42, 44) made from plastic for guiding the control piston (14), the guide surfaces (42, 44) preventing metallic contact of the control piston (14) with the cylinder.

2. Device as claimed in claim 1,
**characterized in that**
the main flow path (16) is disposed in such a way that, when the control pressure is lowered, the control piston (14) is displaced by the acting high pressure in the direction of the longitudinal axis (L) of the piston.

3. Device (1) as claimed in any one of the preceding claims,
**characterized in that**
the control piston (14) is made completely from a metal or from ceramic.

4. Device (1) as claimed in at least one of the preceding claims,
**characterized in that**
the control piston (14) has a hollow space (52).

5. Device (1) as claimed in at least one of the preceding claims,
**characterized in that**
at least one sealing unit (28) is disposed in the cylinder (12) in order to seal the movement of the control piston (14).

6. Device (1) as claimed in at least one of the preceding claims,
**characterized in that**
the device (1) has an application chamber (30) which surrounds the control piston (14) in the circumferential direction thereof and can be supplied with blow air.

7. Device (1) as claimed in any one of the preceding claims,
**characterized in that**
the control piston (14) has a displacement surface (15) which with the application of compressed air can move the control piston (14) along the longitudinal axis (L) of the piston.

8. Device (1) as claimed in any one of the preceding claims,
**characterized in that**
the control piston (14) is of multi-part and in particular two-part construction.

9. Device (1) as claimed in any one of the preceding claims,
**characterized in that**
the control piston (14) has a stop screw (34).

10. Device (1) as claimed in any one of the preceding claims,
**characterized in that**
the control piston (14) has a plastic element (25, 27).

## Revendications

1. Dispositif (1) avec des postes de soufflage (4) disposés sur une roue de soufflage (2) servant à mouler par soufflage des contenants (10) à partir d'un matériau thermoplastique, avec un système (20) servant à commander de manière pneumatique une pression de soufflage, dans lequel le système (20) de commande pneumatique présente un piston de commande (14) guidé dans un cylindre (12), qui est monté de manière à pouvoir être coulissé en direction d'un axe longitudinal de piston (L), et dans lequel une voie d'écoulement principale (16) pouvant être fermée par le piston de commande (14) s'étend à travers le cylindre (12) de part en part, et dans lequel le piston de commande (14) est pourvu d'une surface de commande (24), qui est tournée vers un espace de commande (26) du cylindre (12) et qui est réalisée pour transférer une force de commande sur le piston de commande (14), dans lequel le piston de commande (14) est réalisé au moins par endroits à partir d'un métal ou d'une céramique,
**caractérisé en ce que**
le cylindre (12) présente des surfaces de guidage (42, 44) produites à partir d'une matière synthétique, servant à guider le piston de commande (14), tout contact métallique du piston de commande (14) avec le cylindre est empêché par les surfaces de guidage (42, 44).

2. Dispositif selon la revendication 1,
**caractérisé en ce que**
la voie d'écoulement principale (16) est disposée de telle manière que lors d'une baisse de la pression de commande, le piston de commande (14) est coulissé du fait de la pression élevée active en direction de l'axe longitudinal de piston (L).

3. Dispositif (1) selon au moins l'une quelconque des revendications précédentes,
**caractérisé en ce que**
le piston de commande (14) est réalisé en totalité à partir d'un métal ou à partir d'une céramique.

4. Dispositif (1) selon au moins l'une quelconque des revendications précédentes,
**caractérisé en ce que**
le piston de commande (14) présente un espace creux (52).

5. Dispositif (1) selon au moins l'une quelconque des revendications précédentes,
**caractérisé en ce que**
au moins un système d'étanchéité (28) servant à étanchéifier le déplacement du piston de commande (14) est disposé dans le cylindre (12).

6. Dispositif (1) selon au moins l'une quelconque des revendications précédentes,
**caractérisé en ce que**
le dispositif (1) présente un espace de sollicitation (30) entourant le piston de commande (14) dans sa direction périphérique, qui peut être soumis à l'action d'air de soufflage.

7. Dispositif (1) selon au moins l'une quelconque des revendications précédentes,
**caractérisé en ce que**
le piston de commande (14) présente une surface de refoulement (15), qui peut faire coulisser le piston de commande (14) le long de l'axe longitudinal de piston (L) lors de l'application d'air comprimé.

8. Dispositif (1) selon au moins l'une quelconque des revendications précédentes,
**caractérisé en ce que**
le piston de commande (14) est réalisé en plusieurs parties et en particulier en deux parties.

9. Dispositif (1) selon au moins l'une quelconque des revendications précédentes,
**caractérisé en ce que**
le piston de commande (14) présente une vis de butée (34).

10. Dispositif (1) selon au moins l'une quelconque des revendications précédentes,
**caractérisé en ce que**
le piston de commande (14) présente un élément en matière synthétique (25, 27).
